# EUROPÄISCHE PATENTSCHRIFT

(11) **EP 3 225 928 B1**
(45) Veröffentlichungstag und Bekanntmachung des Hinweises auf die Patenterteilung: **17.06.2020**
(21) Anmeldenummer: 17163353.0
(22) Anmeldetag: 28.03.2017
(51) Int. Cl.: F24F 11/30, F24F 110/20, F24F 110/22, F24F 110/68, F24F 11/00

(54) **VORRICHTUNG UND VERFAHREN ZUR KONTROLLE DES RAUMKLIMAS UND DAMIT AUSGESTATTETES GEBÄUDE**
DEVICE AND METHOD FOR CONTROLLING THE INDOOR CLIMATE, AND BUILDING EQUIPPED WITH SAME
DISPOSITIF ET PROCÉDÉ DE RÉGULATION DE LA TEMPÉRATURE AMBIANTE D'UNE PIÈCE ET BÂTIMENT AINSI ÉQUIPÉ

(30) Priorität: 01.04.2016 DE 102016205455
(43) Veröffentlichungstag der Anmeldung: 04.10.2017
(73) Patentinhaber: Fraunhofer-Gesellschaft zur Förderung der angewandten Forschung e.V., 80686 München (DE)
(72) Erfinder: Sedlbauer, Klaus, 83700 Rottach-Egern (DE); Zillig, Wolfgang, 83623 Dietramszell (DE)
(74) Vertreter: Friese Goeden Patentanwälte PartGmbB

(56) Entgegenhaltungen:
- US-A1- 2005 239 393
- US-A1- 2015 011 154

## Beschreibung

Die Erfindung betrifft eine Vorrichtung zur Kontrolle des Raumklimas eines Innenraumes mit zumindest einem Innensensor, welcher dazu eingerichtet ist, zumindest einen das Raumklima charakterisierenden Paramater zu erfassen, zumindest einem Aktor, mit welchem das Raumklima beeinflusst werden kann, und zumindest einer Steuer- oder Regeleinrichtung, welcher das Signal des Innensensors zuführbar ist und welche dazu eingerichtet ist, ein Ausgangssignal für den Aktor zu erzeugen. Weiterhin betrifft die Erfindung ein Gebäude mit einer solchen Vorrichtung sowie ein Verfahren zur Kontrolle des Raumklimas eines Innenraumes, bei welchem mit zumindest einem Innensensor zumindest ein das Raumklima charakterisierender Parameter erfasst wird, mit zumindest einem Aktor das Raumklima beeinflusst wird und mit zumindest einer Steuer- oder Regeleinrichtung aus den Messwerten des Innensensors ein Ausgangssignal für den Aktor erzeugt wird.

Aus der Praxis ist bekannt, dass radioaktives Radon (²²²Rn) aus dem Erdreich in Gebäude eindringen und sich dort anreichern kann. Durch den Zerfall des Radons und der weiteren radioaktiven Elemente der Zerfallskette kann eine radioaktive Belastung der Nutzer des Gebäudes entstehen.

Aus der FR 2919394 A ist daher eine mechanische Lüftungsanlage bekannt, welche von einem Sensor gesteuert wird, welcher den Radongehalt innerhalb des Gebäudes bestimmt. Hierdurch soll bei Auftreten hoher Konzentrationen des radioaktiven Radons der Luftaustausch vergrößert und das Radon abgeführt werden.

Eine solche Vorrichtung weist jedoch den Nachteil auf, dass Anschaffungskosten und Betriebskosten sowie Wartungsaufwand erheblich sein können, sodass eine solche Lüftungsanlage nicht für alle Gebäude geeignet ist.

Aus der US 2015/0011154 A1 ist eine Vorrichtung zur Kontrolle des Raumklimas mit den Merkmalen des Oberbegriffs von Anspruch 1 bekannt. Dabei sind mehrere Sensoren zur Messung verschiedener Luftparameter vorgesehen.

Daher besteht ein Bedürfnis nach einer Vorrichtung und einem Verfahren, welche den Zielkonflikt bei divergierenden Zielparametern mit geringem Aufwand lösen können.

Diese Aufgabe wird erfindungsgemäß durch eine Vorrichtung gemäß Anspruch 1, ein Gebäude nach Anspruch 6 und ein Verfahren nach Anspruch 7 gelöst. Vorteilhafte Weiterbildungen der Erfindung finden sich in den Unteransprüchen.

Erfindungsgemäß wird eine Vorrichtung zur Kontrolle des Raumklimas eines Innenraumes durch eine automatisierte Fensterlüftung vorgeschlagen. Hierzu wird mittels eines Innensensors zumindest ein, das Raumklima charakterisierender Parameter erfasst. Ein den Parameter repräsentierendes elektrisches Signal wird sodann einer Steuer- oder Regeleinrichtung zugeführt. Diese bestimmt daraus ein Ausgangssignal, welches einem Aktor zugeführt wird. Der Aktor wiederum ist mit einem Fensterflügel verbunden, um das Fenster in Abhängigkeit des elektrischen Signales zu öffnen oder zu schließen. Dies kann in einfachen Ausführungsformen der Erfindung ein einfacher Öffnen- bzw. Schließen-Befehl sein, welcher das Fenster von einer offenen in eine geschlossene Endstellung bewegt. In anderen Ausführungsformen der Erfindung kann der Öffnungswinkel schrittweise oder stufenlos variiert werden, um auf diese Weise den Luftaustausch feinfühlig an die jeweiligen Erfordernisse anzupassen.

Erfindungsgemäß wird vorgeschlagen, dass die Vorrichtung mit zumindest einem Innensensor ausgestattet ist, welcher den Radongehalt in der Raumluft des Innenraumes erfasst. Ein solcher Sensor kann beispielsweise die beim Zerfall von ²²²Rn auftretende α-Strahlung erfassen. In anderen Ausführungsformen der Erfindung kann der Sensor eine erhöhte Genauigkeit aufweisen, wenn dieser zusätzlich auch Zerfallsprodukte von ²²²Rn bzw. deren α- oder β-Strahlung nachweist, beispielsweise Blei und/oder Wismut und/oder Polonium.

Der Innensensor kann zusätzlich weitere elektronische Komponenten enthalten, welche beispielsweise eine Signalverstärkung oder eine A/D-Wandlung bewirken. Der Innensensor weist schließlich zumindest zwei Anschlussdrähte auf, welche ein elektrisches Signal transportieren, welches zumindest den Radongehalt der Raumluft als den das Raumklima charakterisierenden Parameter repräsentiert.

Dieses analoge oder digitale Signal wird einer Steuer- oder Regeleinrichtung zugeführt. Die Steuer- oder Regeleinrichtung kann beispielsweise eine analoge oder digitale Schaltung sein oder eine solche enthalten. In einigen Ausführungsformen der Erfindung kann die Steuer- oder Regeleinrichtung auch einen Mikroprozessor oder einen Microcontroller enthalten, auf welchem eine entsprechende Software ausgeführt wird, welche das erfindungsgemäße Steuer- oder Regelverfahren ausführt. In einigen Ausführungsformen der Erfindung kann die Steuer- oder Regeleinrichtung einen PID-, einen P-, einen PD- oder einen PI-Regler implementieren. In anderen Ausführungsformen der Erfindung kann die Steuer- oder Regeleinrichtung auf Fuzzy-Logik basieren oder ein neuronales Netz implementieren und auf diese Weise optional selbstlernend sein.

Die Steuer- oder Regeleinrichtung stellt ein analoges oder digitales elektrisches Signal zur Verfügung, welches zumindest einem Aktor zugeführt wird. Der zumindest eine Aktor kann beispielsweise ein pneumatischer Stellungsregler, ein Linearmotor oder ein Spindelantrieb sein oder ein solches Element enthalten. Der Aktor kann zwischen Fensterflügel und Fensterrahmen eingesetzt sein und auf diese Weise die Öffnung des Fensters kontrollieren. Beispielsweise kann das Fenster ein Kippflügel oder ein Dreh-/Kippflügel sein, dessen Öffnungswinkel durch die variable Länge des Aktors kontrolliert wird. Hierbei bewirkt ein großer Öffnungswinkel einen größeren Luftaustausch und ein kleinerer Öffnungswinkel einen geringeren Luftaustausch. In einigen Ausführungsformen der Erfindung kann der Aktor auch dazu eingesetzt werden, das Fenster vollständig zu schließen und den Luftaustausch weitgehend oder vollständig zu unterbinden.

In einigen Ausführungsformen der Erfindung kann das Gebäude bzw. der Innenraum mit mehreren Fenstern versehen sein, welche jeweils mit einem zugehörigen Aktor ausgestattet sind. In diesem Fall kann die Steuer- oder Regeleinrichtung auch dazu eingerichtet sein, nur eines der beiden Fenster oder beide zu öffnen, um auf diese Weise eine Querlüftung zu realisieren und so in Abhängigkeit weiterer Parameter, beispielsweise Außentemperatur, Feuchte oder Wind, ein jeweils optimiertes Lüftungsverhalten zu realisieren.

Erfindungsgemäß wird nun vorgeschlagen, dass bei steigendem Radongehalt das Fenster weiter geöffnet wird, um auf diese Weise das radioaktive Gas aus dem Gebäude entweichen zu lassen. Bei sinkendem Radongehalt kann in einigen Ausführungsformen der Erfindung das Fenster wieder geschlossen werden, beispielsweise um Heizenergie einzusparen oder um die Raumfeuchte in einen vorgebbaren Bereich zu halten. Anders als bekannte maschinelle Lüftungsanlagen wird hierbei keine kontinuierliche Energiezufuhr zu einem Lüfter oder einer ähnlichen Fördereinrichtung benötigt. Hierdurch kann auch die Montage rasch und mit geringem Aufwand erfolgen. Auch eine Abdichtung der Gebäudehülle ist nicht in jedem Einzelfall erforderlich, da durch die fehlende maschinelle Lüftungsanlage weder ein Über- noch ein Unterdruck im Gebäude erzeugt wird. Auf diese Weise kann der Radongehalt in einem Innenraum mit geringem Aufwand begrenzt werden. Da keine maschinelle Lüftungsanlage erforderlich ist, sind auch Betriebskosten und Lärmemissionen verringert, sodass sich der Wohnkomfort steigern kann und durch den geringen Energieverbrauch auch eine redundante Stromversorgung durch Akkumulatoren oder die Realisierung in Insellagen einfach möglich ist.

Gemäß der Erfindung enthält die Vorrichtung weiterhin eine Einrichtung zur Erfassung des Wasserdampfpartialdruckes außerhalb des Innenraumes. In diesem Fall kann ein Feuchtegradient zwischen dem Innenraum und dem Außenraum als zusätzliche Regelgröße herangezogen werden. So kann vermieden werden, dass die Luft im Innenraum zu feucht oder zu trocken wird, wodurch entweder Schimmel im Gebäude oder aber durch Austrocknung eine Beeinträchtigung des Wohlbefindens oder eine Beschädigung von Holzelementen, wie beispielsweise Möbeln, auftreten kann.

In einigen Ausführungsformen der Erfindung kann die Einrichtung zur Erfassung des Wasserdampfpartialdruckes einen Außensensor enthalten oder daraus bestehen. Der Außensensor kann entweder den Wasserdampfpartialdruck bzw. die absolute Feuchte unmittelbar bestimmen und diesen Messwert der Steuer- bzw. Regeleinrichtung zuführen. In anderen Ausführungsformen der Erfindung kann die Einrichtung zur Erfassung des Wasserdampfpartialdruckes einen Temperatursensor zur Erfassung der Außentemperatur und einen an sich bekannten Sensor zur Bestimmung der relativen Luftfeuchte enthalten. Hieraus kann die absolute Feuchte bzw. der Wasserdampfpartialdruck in einfacher Weise berechnet werden oder über eine Umsetzungstabelle bestimmt werden. In wiederum anderen Ausführungsformen der Erfindung kann die Einrichtung zur Erfassung des Wasserdampfpartialdruckes lediglich eine Einrichtung zur Erfassung des Tagesdatums sowie eine Umsetzungstabelle enthalten. Der Wasserdampfpartialdruck der Atmosphäre folgt nämlich einem bekannten Jahresgang, sodass dieser in einigen Ausführungsformen der Erfindung anhand des aktuellen Datums mit hinreichender Genauigkeit abgeschätzt werden kann. Selbstverständlich kann die Einrichtung zur Erfassung des Wasserdampfpartialdruckes in einigen Ausführungsformen der Erfindung auch mehrere der genannten Vorrichtungen enthalten, um auf diese Weise den Wasserdampfpartialdruck redundant zu erfassen und die so erhaltenen Werte gegenseitig zu plausibilisieren.

Erfindungsgemäß ist der Innensensor weiterhin dazu eingerichtet, einen Wasserdampfpartialdruck des Innenraums zu erfassen. Dies kann wie vorstehend bereits erläutert über einen entsprechenden Sensor erfolgen oder aber in einigen nicht zur Erfindung gehörenden Ausführungsformen durch Messungen der relativen Feuchte und der Temperatur. Hierzu kann in einigen Ausführungsformen ein zweiter Innensensor vorhanden sein, welcher vom ersten Innensensor zur Erfassung der Radongehalt verschieden ist. In anderen Ausführungsformen der Erfindung können sowohl der Radongehalt der Raumluft als auch der Wasserdampfpartialdruck mit einem gemeinsamen Innensensor erfasst werden, welcher die Daten beispielsweise im Zeitmultiplex an die Steuer- und/oder Regeleinrichtung weiterleitet.

In einigen Ausführungsformen der Erfindung kann die Steuer- oder Regeleinrichtung dazu eingerichtet sein, das Fenster über den Aktor zu öffnen, wenn aufgrund hoher Luftfeuchte im Innenraum eine Schimmelpilzgefahr erkannt wird und der Wasserdampfpartialdruck außen geringer ist als innen. In diesem Fall führt das Öffnen des Fensters zur Abfuhr von Feuchte aus dem Innenraum in die das Gebäude umgebende Atmosphäre, sodass der Schimmelpilzgefahr begegnet werden kann.

In einigen Ausführungsformen der Erfindung kann die Steuer- oder Regeleinrichtung dazu eingerichtet sein, das Fenster über den Aktor zu öffnen, wenn die relative Luftfeuchte bzw. der Wasserdampfpartialdruck im Innenraum zu stark abfällt und die Luft hierdurch zu stark austrocknet. Unzulässige Trockenheit kann beispielsweise dann angenommen werden, wenn die relative Luftfeuchte weniger als etwa 30 % oder weniger als etwa 40 % beträgt. In diesem Fall kann die Luft im Innenraum durch Öffnen des Fensters befeuchtet werden, wenn der Wasserdampfpartialdruck innen geringer ist als außerhalb des Gebäudes.

In einigen Ausführungsformen der Erfindung kann die Steuer- oder Regeleinrichtung dazu eingerichtet sein, ungeachtet des Radongehaltes im Innenraum das Fenster zu schließen, wenn bei Schimmelpilzgefahr der Wasserdampfpartialdruck innen geringer ist als außen oder bei Trockenheit der Wasserdampfpartialdruck außen geringer ist als innen. Bei diesen Ausführungsformen der Erfindung kann somit die relative Luftfeuchte und die Temperatur im Innenraum das Signal des Radongehaltes übersteuern, d.h. ein unzulässig hoher Radongehalt wird als kleineres Problem angesehen als extreme Trockenheit oder extreme Feuchte. Erst wenn dieses Problem gelöst ist, beispielsweise durch Änderung der Witterung, werden die Fenster wieder entsprechend dem Radongehalt der Innenluft geöffnet oder geschlossen, um den Radongehalt unterhalb eines vorgebbaren Grenzwertes zu halten. Somit bietet die erfindungsgemäße Vorrichtung und das erfindungsgemäße Verfahren einen erheblichen Vorteil gegenüber einer simplen manuellen Fensterlüftung, welche in der Regel unabhängig vom Feuchtegehalt der Innen- und Außenluft erfolgt, sodass die Luft oftmals unzulässig austrocknet oder bei warmer, feuchter Witterung eine Schimmelpilzproblematik im Gebäude auftritt.

In einigen Ausführungsformen der Erfindung enthält die Vorrichtung weiterhin eine maschinelle Lüftungseinrichtung. Dies erlaubt in Betriebszuständen, in welchen ein vergleichsweise geringer Luftaustausch erforderlich ist, eine energieeffiziente und lärmarme Fensterlüftung, welche außer für den zeitweisen Betrieb des Aktors und den Betrieb der Steuer- oder Regeleinrichtung und der Sensoren keine elektrische Hilfsenergie benötigt. In Betriebszuständen, welche aufgrund hoher Feuchte im Innenraum und/oder hoher Radonbelastung ein größerer Luftaustausch erforderlich ist, kann der Luftaustausch mit der maschinellen Lüftungseinrichtung zeitweilig erhöht werden. In einigen Ausführungsformen der Erfindung kann in der überwiegenden Zeit der erstgenannte Betriebszustand anliegen, d.h. die Betriebsdauer der maschinellen Lüftungseinrichtung ist gegenüber der gesamten Betriebsdauer untergeordnet. In einigen Ausführungsformen der Erfindung kann die maschinelle Lüftungseinrichtung zumindest einen Ventilator oder einen Kompressor oder ein Absauggebläse enthalten oder daraus bestehen. In einigen Ausführungsformen der Erfindung kann die durch die maschinelle Lüftungseinrichtung erzeugte Luftwechselrate stufenlos zwischen null und einem Maximalwert durch die Steuer- oder Regeleinrichtung kontrolliert werden.

Nachfolgend soll die Erfindung anhand von Figuren ohne Beschränkung des allgemeinen Erfindungsgedankens näher erläutert werden. Dabei zeigt
- Figur 1: ein Blockschaltbild der erfindungsgemäßen Vorrichtung.
- Figur 2: erläutert ein Flussdiagramm des erfindungsgemäßen Verfahrens.

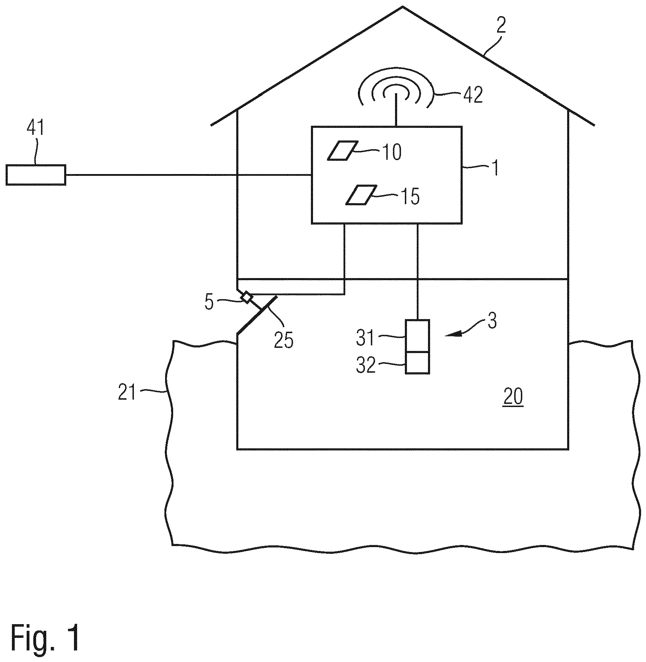

Anhand von Figur 1 wird in einem Blockschaltbild eine Ausführungsform der vorliegenden Erfindung erläutert. Figur 1 zeigt ein Gebäude 2 mit einem Innenraum 20. Da Radon typischerweise durch das umgebende Erdreich 21 in das Gebäude 2 eindringt, ist der Radongehalt üblicherweise im Keller maximal, kann jedoch von dort ausgehend auch höher gelegene Räume fluten. Daher ist der mit der erfindungsgemäßen Vorrichtung überwachte Innenraum 20 im vorliegenden Beispiel ein Kellerraum.

Der Kellerraum 20 verfügt über zumindest ein Fenster 25, welches als Kippflügel ausgeführt ist. In anderen Ausführungsformen der Erfindung kann die Anzahl der Fenster selbstverständlich auch größer sein oder das Fenster kann eine andere Bauform aufweisen, beispielsweise als Schiebefenster, Dreh-/Kippfenster oder andere, an sich bekannte Bauformen.

Der Öffnungsgrad bzw. Kippwinkel oder Öffnungswinkel des Fensters 25 wird durch einen Aktor 5 kontrolliert. Der Aktor 5 kann beispielsweise einen Spindelantrieb, einen Linearmotor oder einen pneumatischen Stellungsregler aufweisen oder daraus bestehen. Somit kann in Abhängigkeit eines elektrischen Ansteuersignals an den Aktor 5 die Öffnung des Fensters 25 kontrolliert werden. Dies kann in einigen Ausführungsformen der Erfindung stufenlos zwischen einem Maximalwert und einem vollständig geschlossenen Fenster erfolgen.

Im Innenraum 20 befindet sich weiter ein Innensensor 3. Im dargestellten Ausführungsbeispiel realisiert der Innensensor 3 zwei Teilsensoren 31 und 32. Der erste Teilsensor 31 erfasst dabei den Radongehalt der Luft im Innenraum 20. Dies kann beispielsweise durch Nachweis der Zerfallsprodukte oder durch Nachweis der beim Zerfall entstehenden α-Strahlung in an sich bekannter Weise erfolgen.

Der zweite Teilsensor 32 erfasst die absolute Feuchte bzw. den Wasserdampfpartialdruck in der Luft des Innenraumes 20. Hierzu kann beispielsweise eine Messung der relativen Feuchte und der Temperatur herangezogen werden, aus welcher der Wasserdampfpartialdruck in an sich bekannter Weise berechnet werden kann. In einigen Ausführungsformen der Erfindung können mehrere Innensensoren 3 vorhanden sein, um das Auftreten von Schimmelpilzgefahr oder Trockenheit bzw. den Radongehalt an unterschiedlichen Stellen im Innenraum 20 zu erfassen.

Der Innensensor 3 weist optional weitere elektronische Komponenten auf, beispielsweise Signalverstärker, Treiber oder A/D-Wandler. Auf diese Weise kann über eine Kabelverbindung oder auch drahtlos ein den Radongehalt und die absolute Feuchte repräsentierendes elektrisches Signal an die Steuer- oder Regeleinrichtung 1 übermittelt werden.

Weiterhin weist die Vorrichtung einen Außensensor 41 auf, welcher die absolute Feuchte bzw. den Wasserdampfpartialdruck außerhalb des Gebäudes 2 erfasst. Auch der Außensensor 41 kann die Außentemperatur und die relative Feuchte ermitteln und insoweit die absolute Feuchte in gleicher Weise wie der zweite Teilsensor 32 des Innensensors 3 erfassen. In anderen Ausführungsformen der Erfindung kann der Außensensor 41 auch ein Sensor zur Erfassung des Wasserdampfpartialdruckes der Außenluft sein. In einigen Ausführungsformen der Erfindung kann der Außensensor 41 auch entfallen.

In diesem Fall kann die absolute Feuchte der Außenluft über eine Schnittstelle 42 der Steuer- oder Regeleinrichtung 1 zugeführt werden. Im dargestellten Ausführungsbeispiel ist die Schnittstelle 42 eine Funkschnittstelle, beispielsweise eine GSM-, eine UMTS- oder eine WLAN-Verbindung. In anderen Ausführungsformen der Erfindung kann die Schnittstelle 42 auch eine kabelgebundene Schnittstelle sein, beispielsweise eine DSL- oder ISDN-Verbindung. Die Messwerte können beispielsweise von einer nahegelegenen Messstation oder einem Wetterdienst übermittelt werden.

In wiederum einer anderen Ausführungsform der Erfindung kann in der Steuer- oder Regeleinrichtung 1 eine Umsetzungstabelle 15 vorhanden sein, welche Werte der absoluten Feuchte im Jahresgang gespeichert hat. Auf diese Weise kann aus dem aktuellen Tagesdatum oder auch nur der jeweiligen Kalenderwoche der entsprechende Wasserdampfpartialdruck abgelesen werden.

Die Steuer- oder Regeleinrichtung 1 kann beispielsweise einen Mikroprozessor oder einen Microcontroller 10 enthalten, auf welchem ein entsprechendes Steuerprogramm läuft. Dieses kann in Fuzzy-Logik, als neuronales Netz oder als klassischer Regler, beispielsweise PD-, PI- oder PID-Regler realisiert sein.

Die Steuer- oder Regeleinrichtung 1 kann unterschiedliche Szenarien implementieren. Tendenziell wird das Fenster 25 bei Auftreten eines hohen Radongehalts geöffnet, um Radon in die Umgebung entweichen zu lassen und die Belastung des Innenraums 20 zu reduzieren. Tritt im Innenraum 20 eine unzulässig hohe Luftfeuchte auf, welche zu Schimmelpilzbefall des Gebäudes 2 führen kann, so wird das Fenster 25 geöffnet, wenn der Wasserdampfpartialdruck im Außenbereich geringer ist, um auf diese Weise eine Trocknung des Innenraumes 20 zu erzielen. Ist die Feuchte hingegen im Außenraum noch höher, wird das Fenster 25 geschlossen.

Umgekehrt kann das Fenster 25 zur Befeuchtung der Luft im Innenraum 20 geöffnet werden, wenn die Feuchte als zu gering erkannt wird und die Feuchte im Außenraum höher ist als im Innenraum. Die unter Umständen gegenläufigen Parameter Feuchte und Radongehalt werden von der Steuer- oder Regeleinrichtung 1 entsprechend priorisiert, sodass im Falle von Konflikten der Zielgrößen Feuchte und Radongehalt das größere Problem für die Benutzer des Gebäudes 2 zuerst behoben wird und damit die Beeinträchtigung der Nutzer minimiert ist.

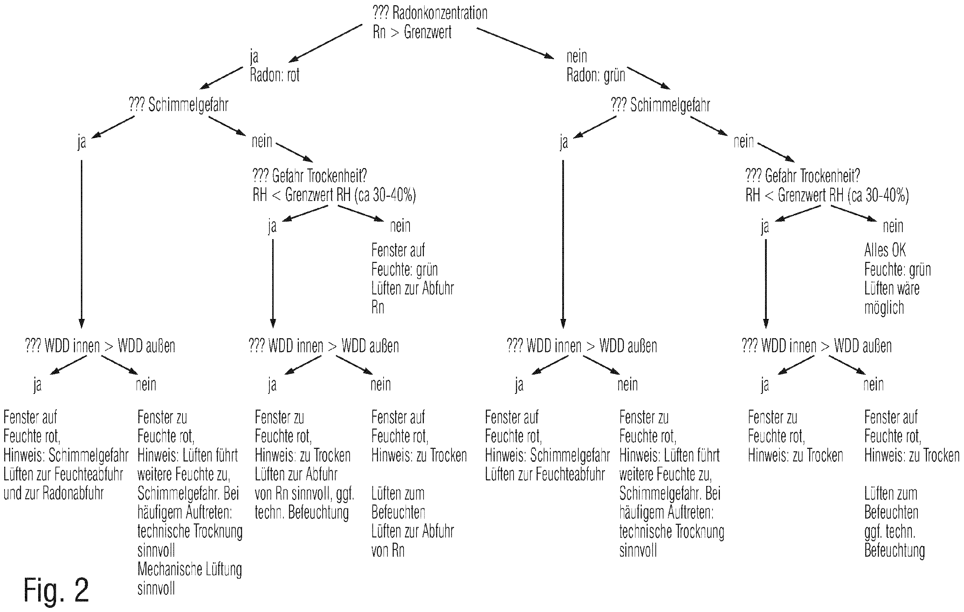

Eine solche beispielhafte Regelungsstrategie erläutert Figur 2. Gemäß Figur 2 wird zunächst der Radongehalt mittels des ersten Teilsensors 31 des Innensensors 3 ermittelt.

Sodann prüft ein Komparator, ob der Radongehalt oberhalb eines vorgebbaren Grenzwertes liegt, beispielsweise mehr als 300 Bq/m³.

Sofern eine solche Grenzwertüberschreitung vorliegt, prüft die Regeleinrichtung 1 als nächstes, ob eine Schimmelpilzgefahr vorliegt. Eine solche Schimmelpilzgefahr ergibt sich zum einen dann, wenn die Luftfeuchte im Innenraum 20 oberhalb eines vorgebbaren Grenzwertes liegt oder wenn einzelne, besonders gefährdete Bereiche, beispielsweise eine Außenwand, hohe Feuchte und niedrige Temperatur aufweisen.

Wird eine solche Schimmelpilzgefahr erkannt, so prüft die Regeleinrichtung 1 als nächstes, ob der Wasserdampfpartialdruck innen größer ist als außen. Wenn auch diese Prüfung positiv verläuft, wird über den Aktor 5 das Fenster 25 geöffnet. Dies führt zur Abfuhr von Feuchte und von Radon, sodass sich beide Parameter im Innenraum 20 verbessern. Ist jedoch der Wasserdampfpartialdruck außen höher als innen, so würde das Öffnen des Fensters zu weiterer Feuchte im Innenraum 20 und damit zu einer Verstärkung der Schimmelpilzgefahr führen. In diesem Fall bleibt das Fenster 25 ungeachtet des erhöhten Radongehalts geschlossen. Die Nutzer können auf diesen Zustand durch ein optisches oder akustisches Warnsignal hingewiesen werden, um die Aufenthaltsdauer in den radonbelasteten Räumen zu minimieren.

Wird jedoch im zweiten Verfahrensschritt die Schimmelpilzgefahr aufgrund Unterschreitens der Messwerte des Wasserdampfpartialdruckes verneint, so prüft die Steuer- bzw. Regeleinrichtung als nächstes die Gefahr einer Trockenheit. Die Trockenheit im Innenraum 20 kann beispielsweise angenommen werden, wenn der Wert der relativen Feuchte unter einem vorgebbaren Grenzwert liegt, beispielsweise weniger als etwa 30 % oder weniger als etwa 40 %. Sofern keine Gefahr von Trockenheit besteht, kann der Aktor 5 das Fenster 25 öffnen, um auf diese Weise den unzulässig hohen Radongehalt abzuführen.

Ist jedoch die Luftfeuchte im Innenraum 20 sehr gering, so prüft die Steuer- bzw. Regeleinrichtung vor dem Betätigen des Aktors 5 zunächst, ob die Feuchte bzw. der Wasserdampfpartialdruck außen größer oder geringer ist als im Innenraum 20. In diesem Fall wird das Fenster 25 über den Aktor 5 nur dann geöffnet, wenn sich hierdurch keine Verschärfung des Problems der Trockenheit ergibt, d.h. falls der Wasserdampfpartialdruck innen größer ist als außen bleibt das Fenster geschlossen, um keine Feuchte aus dem Gebäude abzuführen. Ist der Wasserdampfpartialdruck außen jedoch größer als innen, so wird das Fenster geöffnet und neben der Verringerung des Radongehaltes kann auch die Luftfeuchte im Innenraum 20 ansteigen.

Ergibt die Prüfung des Radongehaltes im ersten Verfahrensschritt keine Grenzwertüberschreitung, so besteht aus diesem Grund keine Notwendigkeit, das Fenster 25 zu öffnen. Gleichwohl kann die erfindungsgemäße Vorrichtung in diesem Fall dazu eingerichtet sein, auch in diesem Fall die Schimmelpilzgefahr zu prüfen, d.h. beispielsweise ein Überschreiten der relativen Luftfeuchte bzw. des Wasserdampfpartialdruckes im Innenraum 20 zu prüfen. Ergibt diese Prüfung, dass die Luftfeuchte im Innenraum 20 sehr hoch ist und reduziert werden sollte, so wird wiederum anhand des Wasserdampfpartialdruckes im Außenbereich geprüft, ob dieses Ziel durch Öffnen des Fensters erreicht werden kann. Dementsprechend wird das Fenster dann geöffnet, um Feuchte aus dem Innenraum 20 abzuführen oder es bleibt geschlossen, um die Feuchte im Innenraum 20 nicht weiter ansteigen zu lassen.

Liegt jedoch aufgrund geringer Luftfeuchte keine Schimmelpilzgefahr vor, so kann die Steuer- oder Regeleinrichtung auch bei geringem Radongehalt prüfen, ob die Gefahr einer unzulässig großen Trockenheit vorliegt und ob dieses Problem durch Öffnen des Fensters 25 gelöst werden kann, wie vorstehend bereits erläutert wurde. Auch in diesem Fall wird dann das Fenster entweder geschlossen, um die Luftfeuchte im Innenraum 20 nicht weiter absinken zu lassen oder aber das Fenster wird geöffnet, um die Luft im Innenraum 20 zu befeuchten.

Die jeweiligen Messwerte der Sensoren bzw. der jeweilige Betriebszustand kann dem Benutzer optisch oder akustisch visualisiert werden. In einigen Ausführungsformen der Erfindung kann dies auch mittels einer Funkschnittstelle oder einem Computernetzwerk an entfernten Orten erfolgen, sodass der Benutzer auch bei Abwesenheit stets über den Status seines Gebäudes informiert ist. Insoweit kann die vorgeschlagene Vorrichtung auch Teil einer komplexen Gebäudeautomation sein, welche die Steuerung bzw. Regelung weiterer Gebäudeeinrichtungen, beispielsweise Heizung, Klimatisierung oder Beleuchtung, einschließt.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Aus-führungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Vorrichtung zur Kontrolle des Raumklimas eines Innenraumes (20) mit zumindest einem Innensensor (3), welcher dazu eingerichtet ist, zumindest einen das Raumklima charakterisierenden Parameter zu erfassen, und
zumindest einem Aktor (5), mit welchem das Raumklima beeinflusst werden kann, und
zumindest einer Steuer- oder Regeleinrichtung (1), welcher das Signal des Innensensors (3) zuführbar ist und welche dazu eingerichtet ist, ein Ausgangssignal für den Aktor (5) zu erzeugen, wobei mit dem zumindest einen Innensensor (3) ein Radongehalt der Raumluft im Innenraum (20) erfassbar ist und mit dem zumindest einen Aktor (5) der Öffnungswinkel von zumindest einem Fenster (25) beeinflussbar ist, **dadurch gekennzeichnet, dass** der zumindest eine Innensensor weiterhin dazu eingerichtet ist, einen Wasserdampfpartialdruck in der Raumluft im Innenraum zu erfassen, wobei die Vorrichtung weiterhin eine Einrichtung (41, 42, 15) zu Erfassung des Wasserdampfpartialdruckes außerhalb des Innenraumes (20) enthält und die Steuer- oder Regeleinrichtung (1) dazu eingerichtet ist, ungeachtet des Radongehaltes im Innenraum (20) das Fenster (25) zu schließen, wenn bei Schimmelpilzgefahr der Wasserdampfpartialdruck innen geringer ist als außen oder bei Trockenheit der Wasserdampfpartialdruck außen geringer ist als innen.

2. Vorrichtung nach Anspruch 1, **dadurch gekennzeichnet, dass** die Einrichtung zur Erfassung des Wasserdampfpartialdruckes einen Außensensor (41) und/oder eine Umsetzungstabelle (15) und/oder eine Datenverbindung (42) enthält oder daraus besteht.

3. Vorrichtung nach einem der Ansprüche 1 oder 2, **dadurch gekennzeichnet, dass** die Steuer- oder Regeleinrichtung (1) dazu eingerichtet ist, das Fenster (25) über den Aktor (5) zu öffnen, wenn der Radongehalt im Innenraum (20) erhöht ist.

4. Vorrichtung nach einem der Ansprüche 1 bis 3, **dadurch gekennzeichnet, dass** die Steuer- oder Regeleinrichtung (1) dazu eingerichtet ist, das Fenster (25) über den Aktor (5) zu öffnen, wenn bei Schimmelpilzgefahr der Wasserdampfpartialdruck außen geringer ist als innen.

5. Vorrichtung nach einem der Ansprüche 1 bis 4, **dadurch gekennzeichnet, dass** die Steuer- oder Regeleinrichtung (1) dazu eingerichtet ist, das Fenster (25) über den Aktor (5) zu öffnen, wenn bei Trockenheit der Wasserdampfpartialdruck innen geringer ist als außen.

6. Gebäude mit einer Vorrichtung nach einem der Ansprüche 1 bis 5.

7. Verfahren zur Kontrolle des Raumklimas eines Innenraumes (20), bei welchem mit zumindest einem Innensensor (3) zumindest ein das Raumklima charakterisierender Parameter erfasst wird, und
mit zumindest einem Aktor (5)das Raumklima beeinflusst wird, und
mit zumindest einer Steuer- oder Regeleinrichtung (1) aus den Messwerten des Innensensors (3) ein Ausgangssignal für den Aktor (5) erzeugt wird,
**dadurch gekennzeichnet, dass**
mit dem zumindest einen Innensensor (3) der Radongehalt der Raumluft und ein Wasserdampfpartialdruck der Raumluft im Innenraum (20) erfasst wird und mit dem zumindest einen Aktor (5) der Öffnungswinkel von zumindest einem Fenster (25) beeinflusst wird, wobei weiterhin der Wasserdampfpartialdruck außerhalb des Innenraumes (20) erfasst wird und ungeachtet des Radongehaltes im Innenraum (20) das Fenster (25) geschlossen wird, wenn bei Schimmelpilzgefahr der Wasserdampfpartialdruck innen geringer ist als außen oder bei Trockenheit der Wasserdampfpartialdruck außen geringer ist als innen.

8. Verfahren nach Anspruch 7, **dadurch gekennzeichnet, dass** das Fenster (25) geöffnet wird, wenn der Radongehalt im Innenraum (20) erhöht ist.

9. Verfahren nach einem der Ansprüche 7 oder 8, **dadurch gekennzeichnet, dass** das Fenster (25) geöffnet wird, wenn bei Schimmelpilzgefahr der Wasserdampfpartialdruck außen geringer ist als innen.

10. Verfahren nach einem der Ansprüche 7 bis 9, **dadurch gekennzeichnet, dass** das Fenster (25) geöffnet wird, wenn bei Trockenheit der Wasserdampfpartialdruck innen geringer ist als außen.

## Claims

1. Apparatus for controlling the indoor climate of an interior space (20) with at least one indoor sensor (3), which is configured to detect at least one parameter characterizing the indoor climate, and
with at least one actuator (5), by means of which the indoor climate can be influenced, and
with at least one open-loop or closed-loop control device (1) to which the signal of the indoor sensor (3) can be supplied and which is configured to generate an output signal for the actuator (5), wherein the at least one indoor sensor (3) can be used to detect a radon content of the room air in the interior space (20) and the at least one actuator (5) can be used to influence the opening angle of at least one window (25), **characterized in that** the at least one indoor sensor is further configured to detect a water vapor partial pressure in the room air of the interior space,
wherein the apparatus further includes a device (41, 42, 15) for detecting the water vapor partial pressure outside the interior space (20) and the open-loop or closed-loop control device (1) is configured to close the window (25) irrespective of the radon content in the interior space (20) if, in the event of a risk of mold growth, the water vapor partial pressure inside is lower than outside or, in the event of dry conditions, the water vapor partial pressure outside is lower than inside.

2. Apparatus according to claim 1, **characterized in that** the device for detecting the water vapor partial pressure contains or consists of an outdoor sensor (41) and/or a conversion table (15) and/or a data link (42).

3. Apparatus according to any of claims 1 or 2, **characterized in that** the open-loop or closed-loop control device (1) is configured to open the window (25) via the actuator (5) if the radon content in the interior space (20) is elevated.

4. Apparatus according to any of claims 1 to 3, **characterized in that** the open-loop or closed-loop control device (1) is configured to open the window (25) via the actuator (5) if, in the event of a risk of mold growth, the water vapor partial pressure outside is lower than inside.

5. Apparatus according to any of claims 1 to 4, **characterized in that** the open-loop or closed-loop control device (1) is configured to open the window (25) via the actuator (5) if, in the event of dry conditions, the water vapor partial pressure inside is lower than outside.

6. Building having an apparatus according to any of claims 1 to 5.

7. Method for controlling the room climate of an interior space (20), in which at least one indoor sensor (3) is used to detect at least one parameter characterizing the room climate, and
at least one actuator (5) is used to influence the room climate and at least one open-loop or closed-loop control device (1) is used to generate an output signal for the actuator (5) from the measured values of the indoor sensor (3),
**characterized in that**
the at least one indoor sensor (3) is used to detect the radon content of the room air and a water vapor partial pressure of the room air in the interior space (20) and the at least one actuator (5) is used to influence the opening angle of at least one window (25), wherein furthermore the water vapor partial pressure outside the interior space (20) is detected and, irrespective of the radon content in the interior space (20), the window (25) is closed if, in the event of a risk of mold growth, the water vapor partial pressure inside is lower than outside or if, in the event of dry conditions, the water vapor partial pressure outside is lower than inside.

8. Method according to claim 7, **characterized in that** the window (25) is opened if the radon content in the interior space (20) is elevated.

9. Method according to any of claims 7 or 8, **characterized in that** the window (25) is opened if, in the event of a risk of mold growth, the water vapor partial pressure outside is lower than inside.

10. Method according to any of claims 7 to 9, **characterized in that** the window (25) is opened if, in the event of dry conditions, the water vapor partial pressure inside is lower than outside.

## Revendications

1. Dispositif pour la régulation du climat ambiant d'un espace intérieur (20), comprenant au moins un capteur intérieur (3) qui est conçu pour détecter au moins un paramètre caractérisant le climat ambiant, et au moins un actionneur (5) avec lequel le climat ambiant peut être influencé, et au moins un moyen de commande ou de régulation (1) auquel le signal du capteur intérieur (3) peut être amené et qui est conçu pour générer un signal de sortie pour l'actionneur (5), ledit au moins un capteur intérieur (3) permettant de détecter une teneur en radon de l'air intérieur dans l'espace intérieur (20), et ledit au moins actionneur (5) permettant d'influencer l'angle d'ouverture d'au moins une fenêtre (25),
**caractérisé en ce que**
ledit au moins un capteur intérieur est en outre conçu pour détecter une pression partielle de vapeur d'eau dans l'air ambiant dans l'espace intérieur, le dispositif comprenant en outre un moyen (41, 42, 15) pour détecter la pression partielle de vapeur d'eau à l'extérieur de l'espace intérieur (20), et le moyen de commande ou de régulation (1) étant conçu pour fermer la fenêtre (25) indépendamment de la teneur en radon dans l'espace intérieur (20) si, en cas de risque de formation de moisissures, la pression partielle de vapeur d'eau à l'intérieur est inférieure à celle de l'extérieur ou, en cas de sécheresse, la pression partielle de vapeur d'eau à l'extérieur est inférieure à celle de l'intérieur.

2. Dispositif selon la revendication 1,
**caractérisé en ce que**
le moyen pour détecter la pression partielle de la vapeur d'eau possède ou se compose d'un capteur extérieur (41) et/ou d'une table de conversion (15) et/ou d'une liaison de données (42).

3. Dispositif selon l'une des revendications 1 ou 2,
**caractérisé en ce que**
le moyen de commande ou de régulation (1) est conçu pour ouvrir la fenêtre (25) par l'intermédiaire de l'actionneur (5) si la teneur en radon dans l'espace intérieur (20) est augmentée.

4. Dispositif selon l'une des revendications 1 à 3,
**caractérisé en ce que**
le moyen de commande ou de régulation (1) est conçu pour ouvrir la fenêtre (25) par l'intermédiaire de l'actionneur (5) si, en cas de risque de moisissures, la pression partielle de la vapeur d'eau à l'extérieur est inférieure à celle à l'intérieur.

5. Dispositif selon l'une des revendications 1 à 4,
**caractérisé en ce que**
le moyen de commande ou de régulation (1) est conçu pour ouvrir la fenêtre (25) par l'intermédiaire de l'actionneur (5) si, en cas de sécheresse, la pression partielle de la vapeur d'eau à l'intérieur est inférieure à celle à l'extérieur.

6. Bâtiment comprenant un dispositif selon l'une des revendications 1 à 5.

7. Procédé de contrôle du climat ambiant d'un espace intérieur (20), dans lequel au moins un capteur intérieur (3) est utilisé pour détecter au moins un paramètre caractérisant le climat ambiant,
et le climat ambiant est influencé par au moins un actionneur (5), et
un signal de sortie pour l'actionneur (5) est généré à partir des valeurs mesurées du capteur intérieur (3) par au moins un moyen de commande ou de régulation (1),
**caractérisé en ce que**
à l'aide dudit au moins un capteur intérieur (3), la teneur en radon de l'air ambiant et une pression partielle de vapeur d'eau de l'air ambiant dans l'espace intérieur (20) sont détectées, et à l'aide dudit au moins un actionneur (5), l'angle d'ouverture d'au moins une fenêtre (25) est influencé, la pression partielle de vapeur d'eau à l'extérieur de l'espace intérieur (20) étant en outre détectée et, indépendamment de la teneur en radon dans l'espace intérieur (20), la fenêtre (25) est fermée si, en cas de risque de moisissures, la pression partielle de vapeur d'eau à l'intérieur est inférieure à celle à l'extérieur ou, en cas de sécheresse, la pression partielle de vapeur d'eau à l'extérieur est inférieure à celle à l'intérieur.

8. Procédé selon la revendication 7,
**caractérisé en ce que**
la fenêtre (25) est ouverte si la teneur en radon dans l'espace intérieur (20) est augmentée.

9. Procédé selon l'une des revendications 7 ou 8,
**caractérisé en ce que**
la fenêtre (25) est ouverte si, en cas de risque de moisissures, la pression partielle de la vapeur d'eau à l'extérieur est inférieure à celle à l'intérieur.

10. Procédé selon l'une des revendications 7 à 9,
**caractérisé en ce que**
la fenêtre (25) est ouverte si, en cas de sécheresse, la pression partielle de la vapeur d'eau à l'intérieur est inférieure à celle à l'extérieur.
